# EUROPEAN PATENT APPLICATION

(11) **EP 4 626 047 A1**
(43) Date of publication of application: **01.10.2025**
(21) Application number: 24191941.4
(22) Date of filing: 31.07.2024
(51) Int. Cl.: H04W 4/70, H04L 12/28, H04W 4/80, H04W 52/02, H05B 47/115, H05B 47/19, H04W 4/06, H04W 84/10

(54) **SENTRY DEVICE AND LIGHTING SYSTEM HAVING THE SAME TECHNICAL FIELD**

(30) Priority: 25.03.2024 CN 202410342674
(71) Applicant: Xiamen PVTECH Co., Ltd., Xiamen, Fujian 361101 (CN)
(72) Inventor: XU, CHENGQUAN, Xiamen, 361101 (CN); LU, FUXING, Xiamen, 361101 (CN)
(74) Representative: Lang, Christian

(57) **Abstract**

A sentry device (S 1) includes a beacon module (S13), a detecting module (S12) and a processing module (S11). The detecting module (S12) performs a detecting operation so as to detect a moving object and generate a detecting signal (Ds). The processing module (S11) generates a beacon signal (Bs) upon receiving the detecting signal, and transmits the beacon signal to a lighting device (LD) via the beacon module (S13). The processing module (S11) generates a check value based on a serial number representing the detecting operation, a group identifier, a sentry identifier and a random code, and further generates the beacon signal (Bs) including the serial number, the group identifier, the sentry identifier and the check value, whereby the lighting device (LD) operates according to the beacon signal (Bs).

## Description

### TECHNICAL FIELD

The present invention relates to a sentry device, in particular to an energy-saving sentry device. The present invention further relates to a lighting system having the sentry device.

### BACKGROUND

The currently available sentry device supports Bluetooth mesh network and communicates bidirectionally with a lighting system via Bluetooth mesh network. The sentry device has a Bluetooth mesh network module based on various currently available Bluetooth mesh (BLE mesh) architecture. When the sentry device detects a moving object (such as a person, a vehicle, etc.), it transmits a group report to a lighting device through the Bluetooth mesh network module thereof. Subsequently, the lighting device forwards the group report to other lighting devices belonging to the same group, causing these lighting devices to activate simultaneously.

As the sentry device is powered by batteries, the Bluetooth mesh network module thereof needs to be in a sleep or shutdown state as much as possible to save power. However, although a currently available sentry device has the energy-saving mechanism, the mechanism is ineffective in reducing power consumption significantly, resulting in frequent maintenance requirements for the user. Additionally, since the sentry device needs to receive signals from the Bluetooth mesh network, it requires the signal receiving function, which results in increased power consumption. Furthermore, the sentry device also needs to participate in periodic updates of the Bluetooth mesh network (such as key update), which further increases the power consumption thereof.

### SUMMARY

One embodiment of the present invention provides a sentry device, which includes a beacon module, a detecting module and a processing module. The detecting module performs a detecting operation so as to detect a moving object and generate a detecting signal. The processing module generates a beacon signal upon receiving the detecting signal, and transmits the beacon signal to a lighting device via the beacon module. The processing module generates a check value based on a serial number representing the detecting operation, a group identifier, a sentry identifier and a random code, and further generates the beacon signal including the serial number, the group identifier, the sentry identifier and the check value, whereby the lighting device operates according to the beacon signal.

In one embodiment, the processing module periodically transmits the beacon signal to the lighting device several times.

In one embodiment, the processing module enters a sleep state after the beacon signal is transmitted.

In one embodiment, the processing module generates the random code according to the serial number.

In one embodiment, the beacon signal further includes a customized beacon value and an organization identifier.

Another embodiment of the present invention provides a lighting system, which includes a lighting device group and a sentry device. The lighting device group includes one or more lighting devices. The sentry device performs a detecting operation so as to detect a moving object and generates a detecting signal, and generates a beacon signal upon generating the detecting signal. Then, the sentry device transmits the beacon signal to one of the lighting devices of the lighting device group. The sentry device generates a check value based on a serial number representing the detecting operation, a group identifier, a sentry identifier, and a random code, and further generates the beacon signal including the serial number, the group identifier, the sentry identifier, and the check value. The lighting device activates the others of the lighting devices of the lighting device group according to the beacon signal or discard the beacon signal.

In one embodiment, the sentry device periodically transmits the beacon signal to the lighting device several times.

In one embodiment, the sentry device enters a sleep state after the beacon signal is transmitted.

In one embodiment, the sentry device generates the random code according to the serial number.

In one embodiment, the beacon signal further includes a customized beacon value and an organization identifier.

The sentry device in accordance with the embodiments of the present invention may have the following advantages:
(1) According to one embodiment of the present invention, the sentry device includes a beacon module, a detecting module and a processing module. The detecting module performs a detecting operation so as to detect a moving object and generate a detecting signal. The processing module generates a beacon signal upon receiving the detecting signal, and transmits the beacon signal to a lighting device via the beacon module. The processing module generates a check value based on a serial number representing the detecting operation, a group identifier, a sentry identifier and a random code, and further generates the beacon signal including the serial number, the group identifier, the sentry identifier and the check value, whereby the lighting device operates according to the beacon signal. The lighting device operates according to the beacon signal. The lighting device executes a verification procedure based on the beacon signal and transmits a group report to the others lighting devices belonging to the same group after the validity of the beacon signal is confirmed, such that these lighting devices can enter an active state. After completing the transmission of the beacon signal, the processing module enters a sleep state to reduce power consumption. Thus, the processing module of the sentry device can significantly reduce power consumption after transmitting the beacon signal, leading to a decrease in battery consumption. Therefore, the user does not need to maintain the sentry device frequently, making maintenance of the sentry device more convenient in order to meet actual requirements.
(2) According to one embodiment of the present invention, the sentry device can achieve the lighting device group controlling function through a one-way beacon signal communication mechanism without the need to receive signals from a Bluetooth mesh network, thus eliminating the need for the signal receiving function. Therefore, the power consumption of the sentry device can be further reduced to reduce battery consumption. Therefore, maintenance of the sentry device is more convenient in order to meet actual requirements.
(3) According to one embodiment of the present invention, the sentry device can achieve the lighting device group controlling function through the one-way beacon signal communication mechanism without the need to participate in periodic updates of the Bluetooth mesh network (such as key update). Therefore, the power consumption of the sentry device can be significantly reduced to further reduce battery consumption. Therefore, maintenance of the sentry device is more convenient in order to meet actual requirements.
(4) According to one embodiment of the present invention, the sentry device adds a random code based on the serial number to the beacon signal and generates a check value through hashing algorithm, odd-even grouping step, cyclic redundancy check algorithm, and XOR (exclusive or) algorithm. The above special customized encryption mechanism can effectively implement the one-way beacon signal communication mechanism and effectively prevent the beacon signal from being decrypted. Therefore, the sentry device can enhance the security of the lighting device network, so the sentry device can be more comprehensive in application and meet future development trends.
(5) According to one embodiment of the present invention, the sentry device can effectively reduce power consumption, thereby achieving desired effects while reducing costs. Additionally, the sentry device can enhance the security of the lighting device network. Therefore, the sentry device can achieve excellent practicality so as to meet the needs of different applications.

Further scope of applicability of the present application will become more apparent from the detailed description given hereinafter. However, it should be understood that the detailed description and specific examples, while indicating exemplary embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is a schematic view of a lighting system in accordance with a first embodiment of the present invention.
FIG. 2 is a block diagram of a sentry device of the lighting system in accordance with a first embodiment of the present invention.
FIG. 3 is a first schematic view of an operating state of a lighting system in accordance with a second embodiment of the present invention.
FIG. 4 is a second schematic view of the operating state of the lighting system in accordance with the second embodiment of the present invention.
FIG. 5 is a flow chart of a sentry device controlling method in accordance with a third embodiment of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

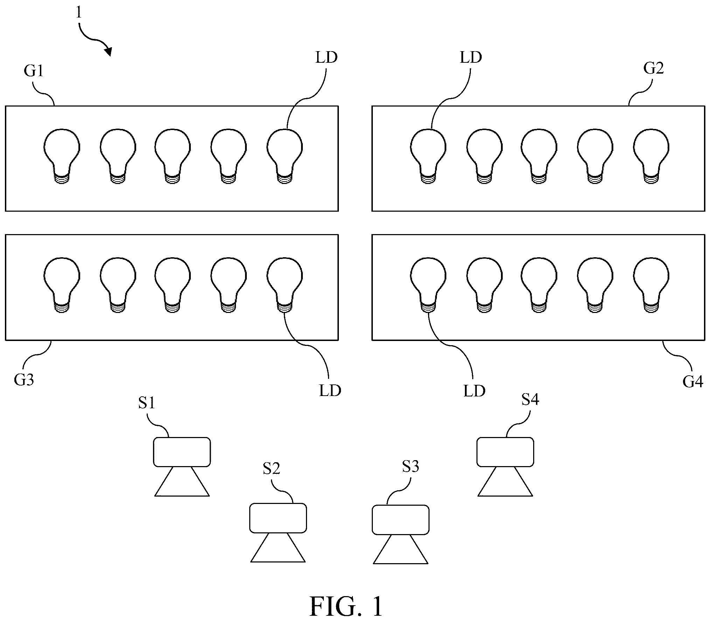

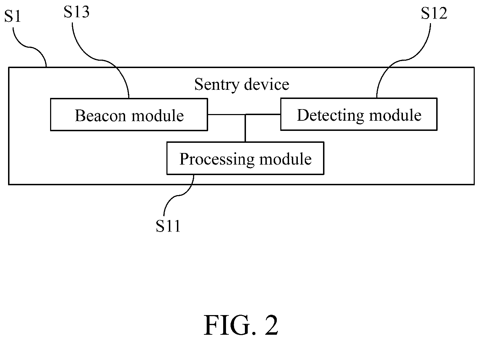

Please refer to FIG. 1 and FIG. 2. FIG. 1 is a schematic view of a lighting system in accordance with a first embodiment of the present invention. FIG. 2 is a block diagram of a sentry device of the lighting system in accordance with a first embodiment of the present invention. As shown in FIG. 1 and FIG. 2, the lighting system 1 can be installed in a building (such as a parking lot, office building, department store, etc.). The lighting system 1 includes four lighting device groups G1, G2, G3, G4, and four sentry devices S1, S2, S3, S4. These four lighting device groups G1, G2, G3, G4 are disposed in different areas of the building. The four sentry devices S1, S2, S3, S4 are placed at appropriate locations. The lighting device group G1 includes a plurality of lighting devices LD (only five lighting devices LD are shown in FIG. 1 for illustration purposes instead of limitation; the lighting devices LD can vary according to actual needs). The lighting device groups G2, G3, and G4 include a plurality of lighting devices LD. Each lighting device LD acts as a node of a Bluetooth mesh network (BLE mesh). The sentry device S1 is corresponding to lighting device group G1. The sentry device S2 is corresponding to lighting device group G2. The sentry device S3 is corresponding to lighting device group G3. The sentry device S4 is corresponding to lighting device group G4. The quantity of lighting device groups G1, G2, G3, G4, and sentry devices S1, S2, S3, S4 are provided as examples and can vary according to actual needs. The lighting devices LD have detecting capabilities, enabling them to start upon detecting moving objects and generate group reports to activate other lighting devices LD within the same group. The sentry device S1 has detecting capabilities and generates beacon signals to activate the lighting device group G1 upon detecting a moving object. Similarly, the sentry devices S2, S3, and S4 generate beacon signals to activate the lighting device groups G2, G3, and G4, respectively, upon detecting moving objects. The sentry devices S1, S2, S3, S4 can be placed at the locations without lighting devices LD to enhance the detecting capabilities of the entire network.

The sentry device S1 includes a beacon module S13, a detecting module S12, and a processing module S11. The four sentry devices S1, S2, S3, S4 have the same structure and operation mechanism; therefore, the sentry device S1 is used as an example in this embodiment. The detecting module S12 performs a detecting operation to detect a moving object (such as a person, vehicle, etc.) and generates a detecting signal. In one embodiment, the detecting module S12 can be an infrared sensor. In another embodiment, the detecting module S12 can also be a microwave sensor or other similar components. Upon receiving the detecting signal, the processing module S11 generates a beacon signal and transmits the beacon signal to one of the lighting devices LD in the lighting device group G1 via the beacon module S13 to operate lighting device LD based on the beacon signal. In one embodiment, the processing module S11 can be a microcontroller (MCU). In another embodiment, the processing module S11 can also be a central-processing unit (CPU), an application-specific integrated circuit (ASIC), a field-programmable gate array (FPGA), or other similar components. In one embodiment, the beacon module S13 can be a Bluetooth beacon signal processing circuit or other circuits with similar functions.

In this embodiment, the processing module S11 generates a check value based on the serial number representing the detecting operation, a group identifier, a sentry identifier, and a random code, and then generates a beacon signal including the serial number, the group identifier, the sentry identifier, and the check value. After completing the transmission of the beacon signal, the processing module S11 can enter the sleep state to reduce the power consumption of sentry device S1 and decrease battery consumption.

Furthermore, the sentry device S1 can achieve the lighting device group controlling function through a one-way beacon signal communication mechanism without the need to receive signals from a Bluetooth mesh network, eliminating the need for the signal receiving function. Therefore, the power consumption of the sentry device S1 can be further reduced to reduce battery consumption, making maintenance of the sentry device S1 more convenient so as to meet actual requirements.

Additionally, the sentry device S1 can achieve the lighting device group controlling function through a one-way beacon signal communication mechanism without participating in periodic updates of the Bluetooth mesh network (such as key update). Therefore, the power consumption of the sentry device S1 can be significantly reduced to further reduce battery consumption, making maintenance of the sentry device S1 more convenient so as to meet actual requirements.

As previously stated, the detecting module S12 performs the detecting operation to detect the moving object and generate the detecting signal. Then, the processing module S11 generates the beacon signal upon receiving the detecting signal and transmits the beacon signal to one of the lighting devices LD in lighting device group G1 via the beacon module S13. An example of the format of the beacon signal is provided in Table 1, including the length, customized beacon value, organization identifier, serial number, group identifier, sentry identifier, and check value of the beacon signal. Table 1 is as follows:

**Table 1**

| | | | | | | |
|---|---|---|---|---|---|---|
| Length (len) | Customized beacon value (beacon type) | Organization identifier | Serial number (SN) | Group identifier | Sentry identifier | Check value (check) |

The customized beacon value can be 0xFF or 0x16, and the organization identifier is assigned by the Bluetooth Special Interest Group (SIG) to a specific organization. The above values are standard values specified by the Bluetooth Special Interest Group and should be well known to those skilled in the art, hence not further elaborated here. The group identifier represents the identifier of the group to which the sentry device S1 belongs, while the sentry identifier is the device identifier of the sentry device S1.

Upon receiving the detecting signal, the processing module S11 increases the serial number of the previous detecting operation by 1 to serve as the serial number for the current detecting operation. Then, based on this serial number (which is used as the seed for generating the random code via any one of currently available random code algorithms), the processing module S11 generates a random code and performs a hashing algorithm to obtain the first data (sha1_out[20]), which is a 20-byte data. In this embodiment, the hashing algorithm is SHA1. In another embodiment, the hashing algorithm can also be SHA2 or similar algorithms.

Next, the processing module S11 performs an odd-even grouping step to group the 20 bytes of the first data to obtain the second data (where the bytes whose order is odd are grouped together, and the bytes whose order is even are grouped together), which includes two data groups (shal_odd[10] and shal_even[10]).

Subsequently, the processing module S11 executes a cyclic redundancy check algorithm based on the second data to obtain a third data, a 2-byte data (odd_crc and even _crc). In this embodiment, the cyclic redundancy check algorithm is crc8. In another embodiment, the cyclic redundancy check algorithm can also be crc7, 16, crc32, or similar algorithms.

Finally, the processing module S11 calculates a check value using an XOR (exclusive or) algorithm based on the third data. Thus, processing module S11 can generate a customized beacon broadcast report as the beacon signal. The processing module S11 periodically transmits the beacon signal to the lighting device LD several times via the beacon module S 13. For example, the processing module S11 can transmit the beacon signal to the lighting device LD every 200 ms and repeat this transmission 5 times. Then, the processing module S11 enters the sleep state. As a result, the sentry device S1 no longer acts as a subnode of the Bluetooth mesh network and no longer executes the Bluetooth mesh network protocol, but only sends beacon signals (customized beacon broadcast report) at appropriate times.

In addition to executing the Bluetooth Special Interest Group's Bluetooth mesh network protocol, each lighting device LD needs to process the aforementioned beacon signals. After receiving a beacon signal, the lighting device LD analyzes whether the serial number matches the serial number of the last received beacon signal. If the lighting device LD determines that the serial number of the received beacon signal is inconsistent with that of the last received beacon signal, the lighting device LD analyzes the check value to confirm its validity. The lighting device LD calculates the check value using the same method (random code algorithm + odd-even grouping step + cyclic redundancy check algorithm + XOR algorithm). If the check value calculated by the lighting device LD matches the check value of the beacon signal, the beacon signal is valid. Finally, the lighting device LD generates a group report based on the group identifier of the beacon signal and broadcasts this group report to the other others of the lighting devices LD in the same group via the Bluetooth mesh network protocol, thereby simultaneously activating these lighting devices LD.

As described above, the sentry device S1 can achieve the lighting device group controlling function through a one-way beacon signal communication mechanism without the need to receive signals from the Bluetooth mesh network, eliminating the need for signal receiving function. Therefore, the power consumption of the sentry device S1 can be further reduced to reduce battery consumption, making maintenance of the sentry device S1 more convenient to meet actual requirements.

Furthermore, the sentry device S1 can achieve the lighting device group controlling function through the one-way beacon signal communication mechanism without participating in periodic updates of the Bluetooth mesh network (such as key update). Therefore, the power consumption of the sentry device S1 can be significantly reduced to further reduce battery consumption, making maintenance of the sentry device S1 more convenient to meet actual requirements.

Moreover, the sentry device S1 incorporates the customized encryption mechanism in the beacon signal based on the serial number, and generates the check value through the hashing algorithm, odd-even grouping step, cyclic redundancy check algorithm, and XOR algorithm. This special customized encryption mechanism effectively achieves the one-way beacon signal communication and effectively prevents the beacon signal from being decrypted. Thus, the sentry device S1 can enhance the security of the lighting device network, so the sentry device S1 can be more comprehensively in application and meet the future development trends.

The embodiment just exemplifies the present invention and is not intended to limit the scope of the present invention; any equivalent modification and variation according to the spirit of the present invention is to be also included within the scope of the following claims and their equivalents.

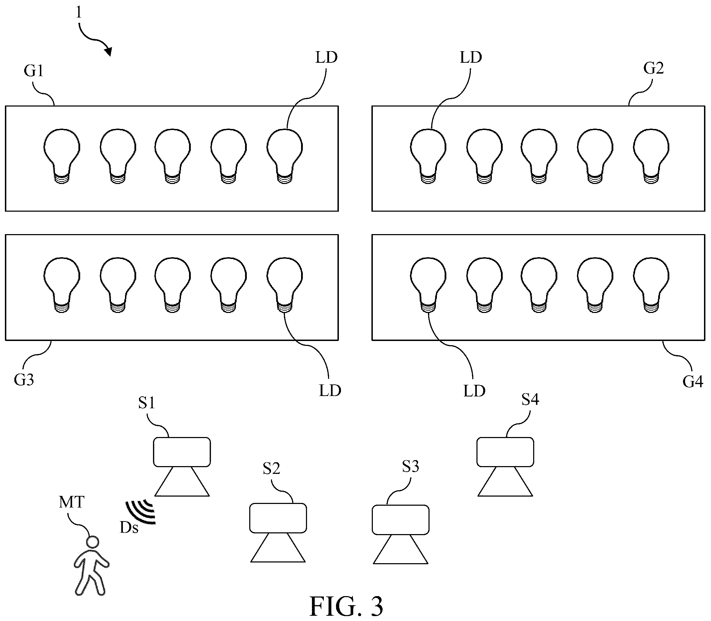

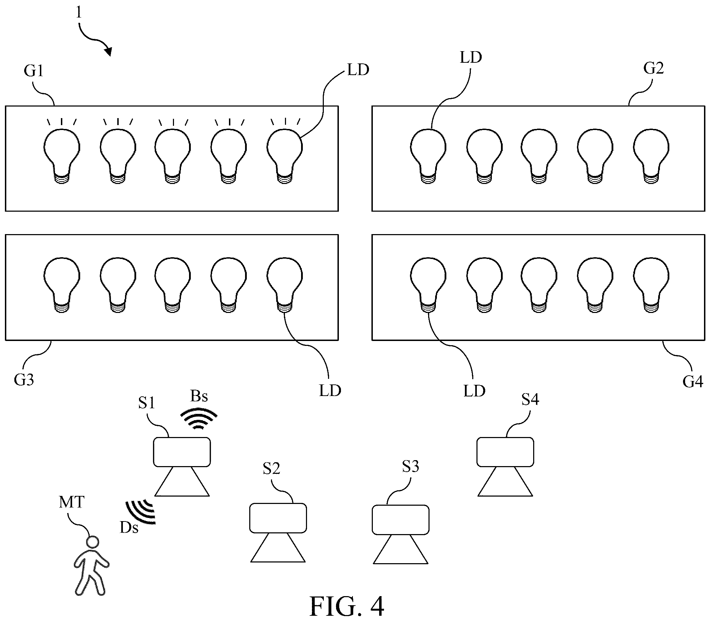

Please refer to FIG. 3 and FIG. 4. FIG. 3 is a first schematic view of an operating state of a lighting system in accordance with a second embodiment of the present invention. FIG. 4 is a second schematic view of the operating state of the lighting system in accordance with the second embodiment of the present invention. Similarly, the lighting system 1 can be installed in a building (such as a parking lot, office building, department store, etc.). The lighting system 1 includes four lighting device groups G1, G2, G3, G4, and four sentry devices S1, S2, S3, S4. These four lighting device groups G1, G2, G3, G4 are disposed in different areas of the building. The four sentry devices S1, S2, S3, S4 are placed at appropriate locations. The lighting device group G1 includes a plurality of lighting devices LD (only five lighting devices LD are shown in FIG. 1 for illustration purposes instead of limitation; the lighting devices LD can vary according to actual needs). The lighting device groups G2, G3, and G4 include a plurality of lighting devices LD. Each lighting device LD acts as a node of a Bluetooth mesh network (BLE mesh). The sentry device S1 is corresponding to lighting device group G1. The sentry device S2 is corresponding to lighting device group G2. The sentry device S3 is corresponding to lighting device group G3. The sentry device S4 is corresponding to lighting device group G4. The quantity of lighting device groups G1, G2, G3, G4, and sentry devices S1, S2, S3, S4 are provided as examples and can vary according to actual needs. The lighting devices LD have detecting capabilities, enabling them to start upon detecting moving objects and generate group reports to activate other lighting devices LD within the same group. The sentry device S1 has detecting capabilities and generates beacon signals to activate the lighting device group G1 upon detecting a moving object. Similarly, the sentry devices S2, S3, and S4 generate beacon signals to activate the lighting device groups G2, G3, and G4, respectively, upon detecting moving objects. The sentry devices S1, S2, S3, S4 can be placed at the locations without lighting devices LD to enhance the detecting capabilities of the entire network.

As shown in FIG. 3, the sentry device S1 performs a detecting operation to detect a moving object MT (such as a person, vehicle, etc.) and generates a detecting signal Ds.

As shown in FIG. 4, the sentry device S1 generates a beacon signal Bs and transmits the beacon signal Bs to one of the lighting devices LD in the lighting device group G1. After transmitting the beacon signal Bs, the sentry device S1 can enter the sleep state, reducing the power consumption and battery usage thereof. Subsequently, the lighting device LD activates the others of the lighting devices LD in the lighting device group G1 based on the beacon signal Bs.

Therefore, the sentry device S1 can achieve the lighting device group controlling function through a one-way beacon signal communication mechanism without the need to receive signals from a Bluetooth mesh network, eliminating the need for signal receiving function. Consequently, the power consumption of the sentry device S1 can be further reduced, reducing battery consumption and making maintenance of the sentry device S1 more convenient to meet actual requirements.

The embodiment just exemplifies the present invention and is not intended to limit the scope of the present invention; any equivalent modification and variation according to the spirit of the present invention is to be also included within the scope of the following claims and their equivalents.

It is worthy to point out that a currently available sentry device has the energy-saving mechanism, but the mechanism is ineffective in reducing power consumption significantly, resulting in frequent maintenance requirements for the user. Additionally, since the sentry device needs to receive signals from the Bluetooth mesh network, it requires the signal receiving function, which results in increased power consumption. Furthermore, the sentry device also needs to participate in periodic updates of the Bluetooth mesh network (such as key update), which further increases the power consumption thereof. By contrast, according to one embodiment of the present invention, the sentry device includes a beacon module, a detecting module and a processing module. The detecting module performs a detecting operation so as to detect a moving object and generate a detecting signal. The processing module generates a beacon signal upon receiving the detecting signal, and transmits the beacon signal to a lighting device via the beacon module. The processing module generates a check value based on a serial number representing the detecting operation, a group identifier, a sentry identifier and a random code, and further generates the beacon signal including the serial number, the group identifier, the sentry identifier and the check value, whereby the lighting device operates according to the beacon signal. The lighting device operates according to the beacon signal. The lighting device executes a verification procedure based on the beacon signal and transmits a group report to the others lighting devices belonging to the same group after the validity of the beacon signal is confirmed, such that these lighting devices can enter an active state. After completing the transmission of the beacon signal, the processing module enters a sleep state to reduce power consumption. Thus, the processing module of the sentry device can significantly reduce power consumption after transmitting the beacon signal, leading to a decrease in battery consumption. Therefore, the user does not need to maintain the sentry device frequently, making maintenance of the sentry device more convenient in order to meet actual requirements.

Also, according to one embodiment of the present invention, the sentry device can achieve the lighting device group controlling function through a one-way beacon signal communication mechanism without the need to receive signals from a Bluetooth mesh network, thus eliminating the need for the signal receiving function. Therefore, the power consumption of the sentry device can be further reduced to reduce battery consumption. Therefore, maintenance of the sentry device is more convenient in order to meet actual requirements.

Further, according to one embodiment of the present invention, the sentry device can achieve the lighting device group controlling function through the one-way beacon signal communication mechanism without the need to participate in periodic updates of the Bluetooth mesh network (such as key update). Therefore, the power consumption of the sentry device can be significantly reduced to further reduce battery consumption. Therefore, maintenance of the sentry device is more convenient in order to meet actual requirements.

Moreover, according to one embodiment of the present invention, the sentry device adds a random code based on the serial number to the beacon signal and generates a check value through hashing algorithm, odd-even grouping step, cyclic redundancy check algorithm, and XOR (exclusive or) algorithm. The above special customized encryption mechanism can effectively implement the one-way beacon signal communication mechanism and effectively prevent the beacon signal from being decrypted. Therefore, the sentry device can enhance the security of the lighting device network, so the sentry device can be more comprehensive in application and meet future development trends.

Furthermore, according to one embodiment of the present invention, the sentry device can effectively reduce power consumption, thereby achieving desired effects while reducing costs. Additionally, the sentry device can enhance the security of the lighting device network. Therefore, the sentry device can achieve excellent practicality so as to meet the needs of different applications.

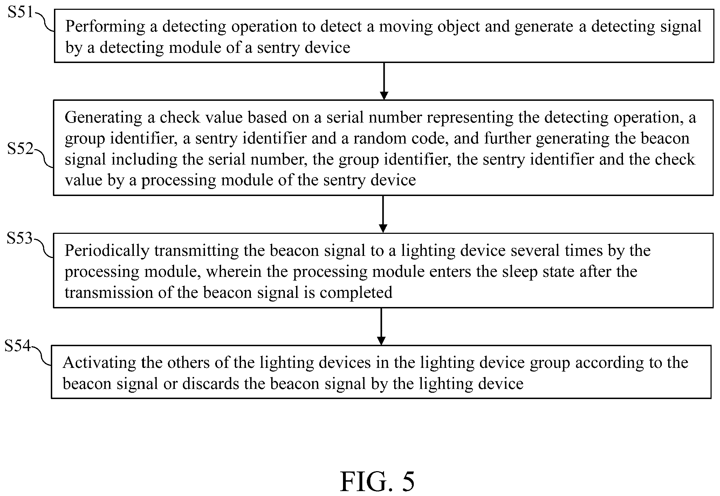

Please refer to FIG. 5, which is a flow chart of a sentry device controlling method in accordance with a third embodiment of the present invention. As shown in FIG. 5, the sentry device controlling method of the embodiment includes the following steps:
Step S51: performing a detecting operation to detect a moving object and generate a detecting signal by a detecting module of a sentry device.

Step S52: generating a check value based on a serial number representing the detecting operation, a group identifier, a sentry identifier and a random code, and further generating the beacon signal including the serial number, the group identifier, the sentry identifier and the check value by a processing module of the sentry device. As set forth above, upon receiving the detecting signal, the processing module increases the serial number of the previous detecting operation by 1 to obtain the serial number of the current detecting operation. Then, the processing module generates the random code based on the serial number of the current detecting operation and performs a hashing algorithm to obtain the first data. Subsequently, the processing module performs an odd-even grouping step to group the first data in order to obtain the second data, which includes two data groups. Next, the processing module executes a cyclic redundancy check algorithm based on the second data to obtain the third data, which is a 2-byte data. Finally, the processing module employs an XOR algorithm on the third data to obtain the check value.

Step S53: periodically transmitting the beacon signal to a lighting device several times by the processing module, wherein the processing module enters the sleep state after the transmission of the beacon signal is completed. For example, the processing module can transmit the beacon signal to the lighting device every 200 ms and repeat the transmission 5 times. Then, the processing module enters the sleep state.

Step S54: activating the others of the lighting devices in the lighting device group according to the beacon signal or discards the beacon signal by the lighting device. As mentioned earlier, if the lighting device determines that the serial number of the received beacon signal is the same as the serial number of the previously received beacon signal, the lighting device discards the beacon signal. If the lighting device determines that the serial number of the received beacon signal is different from the serial number of the previously received beacon signal, the lighting device analyzes the check value to confirm its validity. The lighting device calculates the check value using the same method (random code algorithm + odd-even grouping step + cyclic redundancy check algorithm + XOR algorithm). If the calculated check value matches the check value of the beacon signal, the beacon signal is considered valid. Finally, the lighting device generates a group report based on the group identifier of the beacon signal and broadcasts this group report to the others of the lighting devices in the same group via the Bluetooth mesh network protocol to start these lighting devices simultaneously.

The embodiment just exemplifies the present invention and is not intended to limit the scope of the present invention; any equivalent modification and variation according to the spirit of the present invention is to be also included within the scope of the following claims and their equivalents.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

To sum up, according to one embodiment of the present invention, the sentry device includes a beacon module, a detecting module and a processing module. The detecting module performs a detecting operation so as to detect a moving object and generate a detecting signal. The processing module generates a beacon signal upon receiving the detecting signal, and transmits the beacon signal to a lighting device via the beacon module. The processing module generates a check value based on a serial number representing the detecting operation, a group identifier, a sentry identifier and a random code, and further generates the beacon signal including the serial number, the group identifier, the sentry identifier and the check value, whereby the lighting device operates according to the beacon signal. The lighting device operates according to the beacon signal. The lighting device executes a verification procedure based on the beacon signal and transmits a group report to the others lighting devices belonging to the same group after the validity of the beacon signal is confirmed, such that these lighting devices can enter an active state. After completing the transmission of the beacon signal, the processing module enters a sleep state to reduce power consumption. Thus, the processing module of the sentry device can significantly reduce power consumption after transmitting the beacon signal, leading to a decrease in battery consumption. Therefore, the user does not need to maintain the sentry device frequently, making maintenance of the sentry device more convenient in order to meet actual requirements.

Also, according to one embodiment of the present invention, the sentry device can achieve the lighting device group controlling function through a one-way beacon signal communication mechanism without the need to receive signals from a Bluetooth mesh network, thus eliminating the need for the signal receiving function. Therefore, the power consumption of the sentry device can be further reduced to reduce battery consumption. Therefore, maintenance of the sentry device is more convenient in order to meet actual requirements.

Further, according to one embodiment of the present invention, the sentry device can achieve the lighting device group controlling function through the one-way beacon signal communication mechanism without the need to participate in periodic updates of the Bluetooth mesh network (such as key update). Therefore, the power consumption of the sentry device can be significantly reduced to further reduce battery consumption. Therefore, maintenance of the sentry device is more convenient in order to meet actual requirements.

Moreover, according to one embodiment of the present invention, the sentry device adds a random code based on the serial number to the beacon signal and generates a check value through hashing algorithm, odd-even grouping step, cyclic redundancy check algorithm, and XOR (exclusive or) algorithm. The above special customized encryption mechanism can effectively implement the one-way beacon signal communication mechanism and effectively prevent the beacon signal from being decrypted. Therefore, the sentry device can enhance the security of the lighting device network, so the sentry device can be more comprehensive in application and meet future development trends.

Furthermore, according to one embodiment of the present invention, the sentry device can effectively reduce power consumption, thereby achieving desired effects while reducing costs. Additionally, the sentry device can enhance the security of the lighting device network. Therefore, the sentry device can achieve excellent practicality so as to meet the needs of different applications.

It will be apparent to those skilled in the art that various modifications and variations can be made to the disclosed embodiments. It is intended that the specification and examples be considered as exemplary only, with a true scope of the present invention being indicated by the following claims and their equivalents.

## Claims

1. A sentry device (S1), **characterized by** comprising:
a beacon module (S13);
a detecting module (S12) configured to perform a detecting operation so as to detect a moving object and generate a detecting signal (Ds); and
a processing module (S11) configured to generate a beacon signal (Bs) upon receiving the detecting signal (Ds), and transmit the beacon signal (Bs) to a lighting device (LD) via the beacon module (S13);
wherein the processing module (S11) generates a check value based on a serial number representing the detecting operation, a group identifier, a sentry identifier and a random code, and further generates the beacon signal (Bs) comprising the serial number, the group identifier, the sentry identifier and the check value, whereby the lighting device (LD) operates according to the beacon signal (Bs).

2. The sentry device (S1) as claimed in claim 1, **characterized in that** the processing module (S11) periodically transmits the beacon signal (Bs) to the lighting device (LD) several times.

3. The sentry device (S1) as claimed in claim 2, **characterized in that** the processing module (S11) enters a sleep state after the beacon signal (Bs) is transmitted.

4. The sentry device (S1) as claimed in claim 1, **characterized in that** the processing module (S11) generates the random code according to the serial number.

5. The sentry device (S1) as claimed in claim 1, **characterized in that** the beacon signal (Bs) further comprises a customized beacon value and an organization identifier.

6. A lighting system (1), **characterized by** comprising:
a lighting device group (G1) comprising one or more lighting devices (LD); and
a sentry device (S1) configured to perform a detecting operation so as to detect a moving object and generate a detecting signal (Ds), and generate a beacon signal (Bs) upon generating the detecting signal (Ds), and then transmit the beacon signal (Bs) to one of the lighting devices of the lighting device group (G1);
wherein the sentry device (S1) generates a check value based on a serial number representing the detecting operation, a group identifier, a sentry identifier, and a random code, and further generates the beacon signal (Bs) comprising the serial number, the group identifier, the sentry identifier, and the check value, wherein the lighting device (LD) activates others of the lighting devices (LD) of the lighting device group (G1) according to the beacon signal (Bs) or discard the beacon signal (Bs).

7. The lighting system (1) as claimed in claim 6, **characterized in that** the sentry device (S1) periodically transmits the beacon signal (Bs) to the lighting device (LD) several times.

8. The lighting system (1) as claimed in claim 7, **characterized in that** the sentry device (S1) enters a sleep state after the beacon signal (Bs) is transmitted.

9. The lighting system (1) as claimed in claim 6, **characterized in that** the sentry device (S1) generates the random code according to the serial number.

10. The lighting system (1) as claimed in claim 6, **characterized in that** the beacon signal (Bs) further comprises a customized beacon value and an organization identifier.
